# EUROPEAN PATENT SPECIFICATION

(11) **EP 0 834 118 B1**
(45) Date of publication and mention of the grant of the patent: **31.03.1999**
(21) Application number: 96923277.6
(22) Date of filing: 07.06.1996
(51) Int. Cl.: G06F 9/318

(54) **MICROPROCESSOR USING INSTRUCTION FIELD TO SPECIFY EXPANDED FUNCTIONALITY AND CORRESPONDING METHOD**
MIKROPROZESSOR MIT ERWEITERTER FUNKTIONALITÄT SPEZIFIZIERT DURCH EIN BEFEHLSFELD UND VERFAHREN DAZU
MICROPROCESSEUR UTILISANT UNE ZONE D'INSTRUCTION POUR SPECIFIER UNE FONCTIONNALITE ELARGIE ET METHODE ASSOCIEE

(30) Priority: 07.06.1995 US 474400; 07.06.1995 US 479782; 07.06.1995 US 481704
(43) Date of publication of application: 08.04.1998
(73) Proprietor: ADVANCED MICRO DEVICES INC., Sunnyvale, California 94088-3453 (US)
(72) Inventor: DUTTON, Drew, J., Austin, TX 78746 (US); CHRISTIE, David, S., Austin, TX 78739 (US)
(74) Representative: BROOKES & MARTIN
(86) International application number: US9609986
(87) International publication number: WO9641257

## Description

### BACKGROUND OF THE INVENTION

### 1. Field of the Invention

This invention relates to the field of Microprocessors and, more particularly, to mechanisms for expanding microprocessor functionality within an existing microprocessor architecture.

### 2. Description of the Relevant Art

Microprocessor manufacturers continue to develop new products which execute x86 instructions in order to maintain compatibility with the vast amount of software developed for previous 80x86 generations-the 8086/8, 80286, 80386, and 80486. Maintaining software compatibility has forced many architectural compromises in newer products. In order to retain the functions of earlier products, hardware has often been simply modified or extended in order to increase capability and performance. One area that is often extended to increase capability and performance is the memory addressing model.

Early x86 microprocessors implemented a memory addressing model using segmentation. In segmentation, a memory address is specified by an instruction using two parts: a segment and an offset within the segment. The segment selector is stored in a segment register and indicates where the segment is located in main memory (if the processor is running in unprotected mode) or points to a segment descriptor stored in a segment descriptor table in main memory. The segment descriptor contains information about the segment, including its base address. The base address is added to the offset to form the physical address. Each x86 instruction that has the ability to access memory has a default segment register from which it draws its segment data. The x86 architecture defines six segment registers: CS, DS, SS, ES, FS, and GS, CS is the default segment register used for code (instruction) storage. DS is the default segment register used for instructions that do not manipulate stack values. For stack accesses, SS is the default segment register. ES is the default segment register used for string manipulation instructions. The default segment may be overridden in favor of another segment register for a particular instruction by adding a segment override prefix byte to the instruction. The segment override prefix byte is a field of the instruction. As used herein, the term "instruction field" refers to one or more bytes within the bytes which form an instruction.

Beginning with the 80386, special paging circuitry was added to the segmented address generation hardware to allow the implementation of paged memory systems. Programmers are developing operating systems which use paged memory systems. Paged memory systems offer the ability to load smaller portions of programs into main memory at any given time and provide additional built-in protection checking for programs running simultaneously. Additional information regarding the paging structure and segmentation in the x86 architecture may be found within the publication "Programming the 80386" by Crawford, et al.. SYBEX, Inc., San Francisco, 1987.

Memory segmentation is typically not used when implementing such paged memory systems. Memory segmentation cannot be "turned off", but may be effectively disabled through the use of a "flat" memory model. A flat memory model is created by making all segment registers point to the same memory segment (i.e.. making all memory segments overlap). This overlapping is accomplished by storing the same segment information in all segment registers. Programmers using the paging mechanism typically implement the flat memory model.

The flat memory model has a major impact on the utility of the segment registers. Holding redundant segment address information makes the two general purpose segment registers added with the 80286 microprocessor. FS and GS. virtually useless. (The other segment registers are implicitly referenced by 80 x 86 instructions, but are only marginally useful since they contain redundant information). in addition. operating systems may detect attempts to use these registers for other useful purposes and may generate an exception. Since these registers are used for address generation, loading a segment register with an improper value might enable a program to corrupt the memory space being used by another program, or the operating system itself. A constructive use for explicit references to segment registers under the flat memory model is desired.

### SUMMARY OF THE INVENTION

The problems outlined above are in large part solved by a microprocessor according to the present invention.

The present invention provides a microprocessor comprising:
an address translation unit configured to generate a physical address from a logical address and a segment value;
a plurality of segment registers coupled to said address translation unit wherein at least one of said plurality of segment registers stores said segment value:
a first control unit coupled to said address translation unit wherein said first control unit is configured to detect an instruction field indicative of one of said plurality of segment registers and to convey a signal to said address translation unit indicative of said one of said plurality of segment registers:
a configuration register for storing a value indicative of an address translation mode of said microprocessor:
a second control unit coupled to said configuration register and to said first control unit wherein said second control unit is configured to perform a function dependent on said value stored in said configuration register and further dependent on said signal from said first control unit.

The present invention also provides a method of operating a control unit according to an instruction field indicative of one of a plurality of segment registers comprising:
detecting the presence of said instruction field associated with a particular instruction:
communicating a value relating to said one of said plurality of segment registers to said control unit;
operating said control unit according to said value.

The microprocessor to be described is configured to detect the presence of segment override prefixes in instruction code sequences being executed in flat memory mode, and to use the prefix value or the value stored in the associated segment register to control internal and/or external functions. Additionally, the microprocessor may be configured to signal a change or modification of the normal execution of the instruction(s) which follow. Many embodiments are shown which advantageously use the segment override prefixes to expand the performance or capability of the microprocessor. Both transparent and non-transparent embodiments are contemplated. The microprocessor may be configured to provide numerous useful functions without altering the x86 architecture. Therefore, backward compatibility with older implementations of the x86 architecture may be advantageously maintained when implementing transparent embodiments. When implementing non-transparent embodiments. backward compatibility may not be maintained but still the x86 architecture is not modified. Therefore, code may be easily ported to a processor implementing the new functions because a few encodings would be treated carefully, but the overall nature of the instruction set is unchanged.

### BRIEF DESCRIPTION OF THE DRAWINGS

Other objects and advantages of the invention will become apparent upon reading the following detailed description and upon reference to the accompanying drawings in which:

Figure 1 is a block diagram of a computer system which includes an 80x86 microprocessor.

Figure 2 is a block diagram illustrating the address translation unit of Figure 1 including structures which generate physical memory addresses in 80x86 microprocessors operating in real mode.

Figure 3 is a block diagram illustrating the address translation unit of Figure 1 including structures which generate physical memory addresses in 80x86 microprocessors operating in protected mode.

Figure 4 is a block diagram of a portion of a microprocessor including a cache controller which is selectively enabled through segment register selection information.

Figure 5 is a block diagaran of a portion of a microprocessor including a data prefetch unit which is selectively enabled through segment register selection information.

Figure 6 is a block diagram of a portion of a microprocessor including a branch prediction unit which receives control information through segment register selection information.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### DETAILED DESCRIPTION OF THE INVENTION

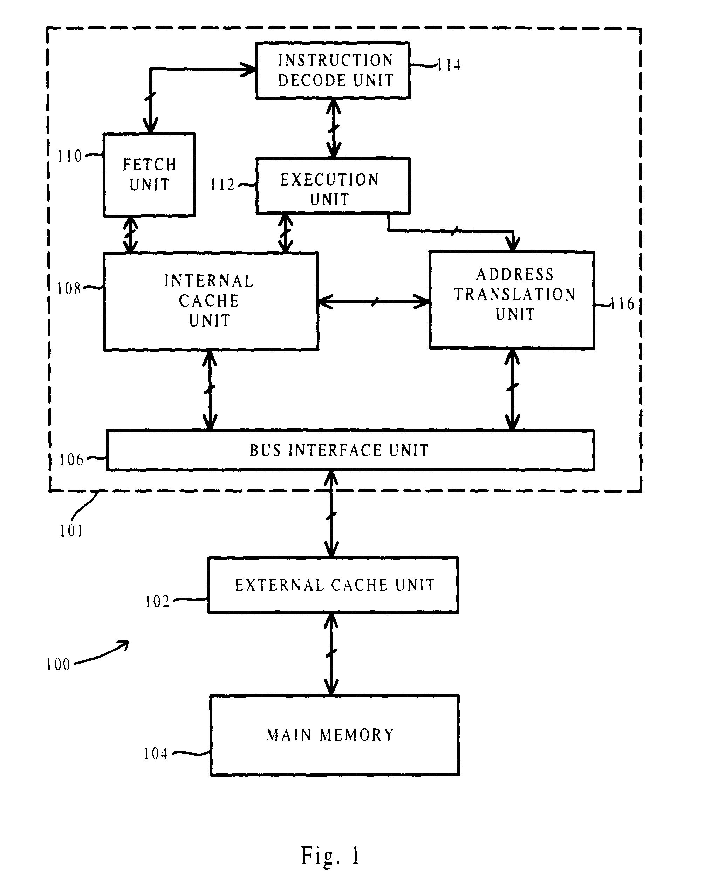

Turning now to Figure 1, a block diagram of a computer system 100 including a microprocessor 101 is shown. in one embodiment microprocessor 101 implements the 80x86 microprocessor architecture. Microprocessor 101 is coupled to an external cache unit 102 and a main memory 104. In some embodiments, external cache unit 102 is not included. External cache unit 102 is used to speed the transfer of recently accessed data and instructions which are not stored in the internal cache of microprocessor 101. Microprocessor 101 includes a bus interface unit 106 which orchestrates the transfer of information from the internal units of microprocessor 101 to external cache unit 102 and/or main memory 104. Internal cache unit 108 stores instruction and data information for use by fetch unit 110 and execution unit 112. In one embodiment, internal cache unit 108 includes a unified instruction and data cache. In another embodiment, separate instruction and data caches are configured into internal cache unit 108.

Before discussing the unique features of the present invention, the units of microprocessor 101 will be described. Fetch unit 110 fetches instructions from internal cache unit 108 and passes the instructions to instruction decode unit 114. Instruction decode unit 114 decodes the received instructions for dispatch to execution unit 112. Operands which reside in registers are fetched by instruction decode unit 114 and provided with the instruction when the instruction is dispatched to execution unit 112. Execution unit 112 is configured to execute instructions once the operands are available. As will be appreciated by those skilled in the art, x86 instructions sometimes have operands which are stored in memory at an address specified in a register, by an offset, or by some combination of registers and offset. In order to retrieve operands stored in memory, execution unit 112 passes segment register identification information and a calculated offset to address translation unit 116. Segment register identification information is generated from either segment override prefix bytes or from the default segment register for the associated instruction. Based on the translation mode of microprocessor 101, address translation unit 116 translates the address via the segmentation method and optionally via the paging method described above.

in one embodiment, the translated address is passed by address translation unit 116 to the internal cache unit. in other embodiments, a cache access is started by execution unit 112 and completed using the translated address from address translation unit 116. In still another embodiment, internal cache unit 108 is addressed with an untranslated address. In this embodiment, address translation unit 116 is accessed when a cache miss occurs, or when cache lines are removed from internal cache unit 108 and returned to main memory 104.

Generally speaking, address translation unit 116 is configured to receive segment register identification information and an offset and to translate this information into a physical address. If flat addressing mode is in effect, the segment register identification information is unimportant since the segment registers each contain the same value. Therefore, features may be added to microprocessor 101 by interpreting the segment identification information passed to address translation unit 116. Features added in this way may be transparent, such that code written to take advantage of the features will run correctly on processors which implement the x86 architecture but do not implement the added features and such that code which was written without awareness of the features will run correctly on processors which implement the added features. Features added in this way may also be non-transparent, such that code written to take advantage of the features may not run correctly on processors which do not implement the features and such that code written without awareness of the features may not run on processors which implement the features. Additionally, features may be added in a non-transparent fashion by using the value stored within the selected segment register (i.e. the segment register specified by the segment register override prefix) to control a feature. When the value stored is used, the feature is non-transparent because address translation unit 114 is configured to ignore (when performing translations) the portion of the segment register used to control the feature. Since this functionality is not a part of the 80x86 architecture, the adding of features controlled by the values stored in a segment register is non-transparent. Many different features are contemplated, as will be revealed below after a discussion of address translation unit 116 in more detail.

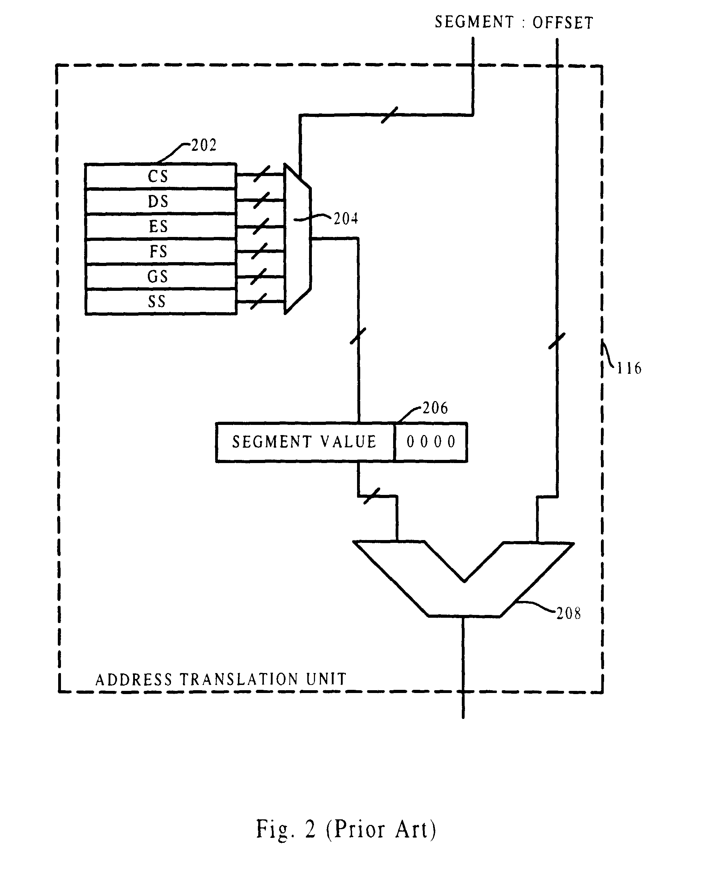

Figure 2 shows address translation unit 116 of Figure 1 in more detail for the case of real mode physical address generation. In this mode, address translation unit 116 generates 20-bit physical addresses. Address translation unit 116 is presented with segment register identification information and a 16-bit offset value. Multiplexor 204 uses the segment register selection information to provide the contents of one of the segment registers to the shift register 206. (8086/8 microprocessors have only four of the six segment registers shown: CS, DS, ES, and SS). Shift register 206 then shills this value four binary bit positions to the left, forming the 20-bit base address of a memory segment. Adder 208 adds the 16-bit offset to the 20-bit segment base address, resulting in a 20-bit physical address for a location in memory.

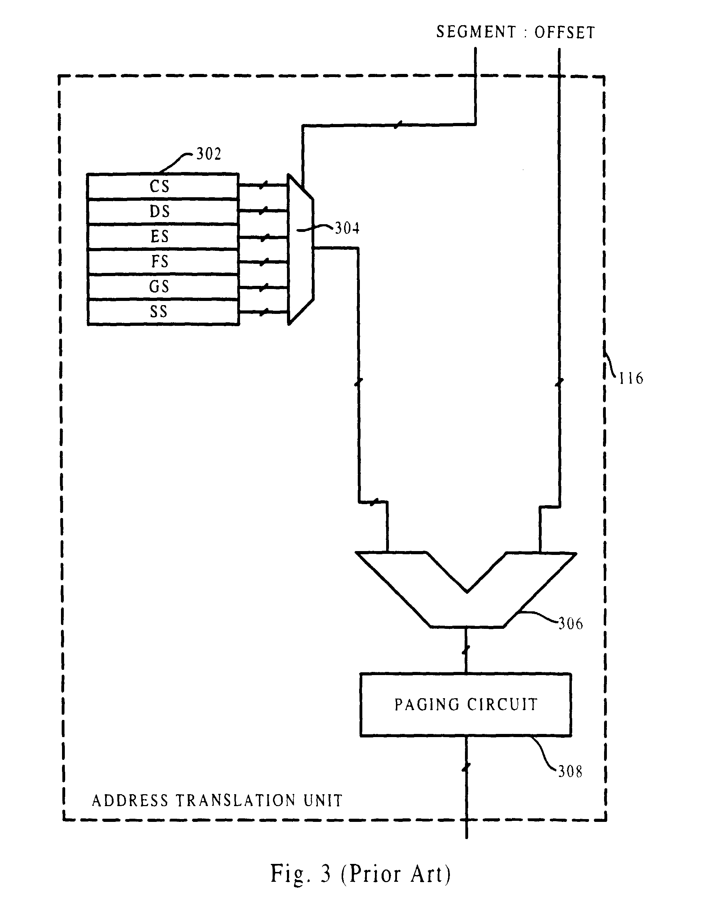

Figure 3 shows address translation unit 116 of Figure I in more detail for the case of protected mode physical address generation. Protected mode is not available on 8086/8 microprocessors. As in real mode, address translation unit 116 is presented with segment register identification information and an offset value. In protected mode, however, the segment register contains an index into one of two tables of memory segment information residing in main memory. The tables contain information about the translation of the address, including the base address of the segment and the size of the segment.

Beginning with the 80286 microprocessor, two general purpose segment registers were added (FS and GS), bringing the total number of segment registers to six. Information about six memory segments may be loaded into the six segment registers. Typically shadow registers associated with each segment register store the data from the associated segment descriptor, including the base addresses of the segment. In the 80286, segment base addresses are 24 bits long. In the 80386 and 80486, segment base addresses are 32 bits long. Multiplexor 304 uses the segment register identification information to provide the contents of one of the base addresses of the corresponding memory segment. Adder 306 adds the offset to the segment base address, resulting in a physical address for a location in memory (assuming paging circuitry 308 is disabled). In the 80286, offsets are 16 bits long, and physical addresses are 24 bits long. In the 80386 and 80486, offsets may be 16 or 32 bits long, and physical addresses are 32 bits long. If paging circuitry 308 is enabled, the address formed by adder 306 is translated yet again according to a paging algorithm. The paging algorithm uses high order bits of the address formed by adder 306 to index into a page directory containing addresses of page tables. The address of the page table is added to a second range of bits from adder 306 to find a particular page directory entry. The information stored therein is used to translate the address formed by adder 306 to a physical address.

In flat addressing mode, the paging algorithm is used for the translation and the address generated by adder 306 is the same as the logical address, as noted above. Therefore, the segment registers are of very little use. Of particularly little use are segment registers FS and GS, which are not default segment registers for x86 instructions. Therefore, the segment register override bytes referring to the FS and GS registers may be used to enable expanded features of microprocessor 101.
Furthermore, segment register override bytes which specify the default segment register for an instruction may be used in another embodiment. It is noted that this other embodiment may also be used when flat memory addressing is not in effect.

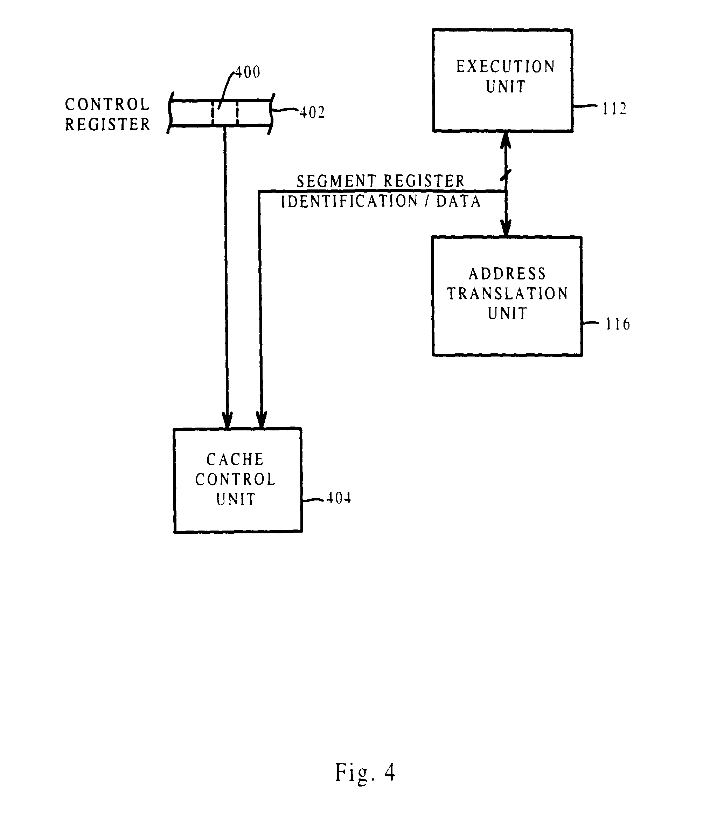

Figure 4 is a block diagram of a portion of microprocessor 101 including a cache control unit 404. Cache control unit 404 is configured within internal cache unit 108 and is coupled to execution unit 112 and to a control register 402. Cache control unit 404 is selectively enabled using segment register identification information, provided by the execution unit 112, and using the contents of an enabling bit 400 in control register 402. When enabling bit 400 is set, the cache controller 404 selectively stores data associated with the instruction which produced the segment register identification information in internal cache unit 108. This cacheability selection is in addition to the architectural cacheability selection of the x86 architecture as embodied in the PCD bit of the page table entry. In one embodiment, the data is stored unless the FS segment register is specified by a segment register override prefix byte for the associated instruction. Other embodiments may use other segment register overrides for this function.

In another embodiment, the value stored within the selected segment register is conveyed to cache control unit 404. The cacheability of a particular address is thereby determined by the value conveyed.

If enabling bit 400 is cleared, the segment register identification information is not used to determine cacheability of a particular address. In another embodiment, the cacheability trait for an address is conveyed to external cache 102 (shown in Figure 1).

In yet another embodiment, cache controller 404 is configured to selectively store a line in write-through or writeback mode. When enabling bit 400 is set, the cache controller 404 selectively stores data associated with the instruction which produced the segment register identification information in internal cache unit 108 in a write-through or writeback mode. This mode selection is in addition to the architectural write-through selection of the x86 architecture as embodied in the PWT bit of the page table entry. In one embodiment, the data is stored in writeback mode unless the FS segment register is specified by a segment register override prefix byte for the associated instruction. Other embodiments may use other segment register override prefix bytes for this function. In yet another embodiment, the value stored within the selected segment register is conveyed to cache control unit 404. The write-through or writeback mode of a particular address is thereby determined by the value conveyed. If enabling bit 400 is cleared, the segment register identification information is not used to determine the write-through or writeback mode of a particular address. In another embodiment, the write-through or writeback trait for an address is conveyed to external cache 102 (shown in Figure 1).

Cache control unit 404 has another embodiment which implements a cache flush or cache clean operation dependent on a particular value of segment register identification information associated with an instruction. A cache flush operation causes a cache line containing the address of the cache flush operation to be removed from the cache. If the line is modified with respect to main memory, the modified value is written back to main memory. A cache clean operation is similar to the flush operation in that a modified cache line is written back to main memory. However, the cache clean operation does not remove the line from the cache. These operations affect a single cache line, as opposed to the WVD and WBINVD instructions of the x86 architecture which affect the entire cache at once. The GS segment override prefix byte is used to cause a flush operation in this embodiment, and the ES segment override prefix byte is used to cause a clean operation. Other embodiments may use other segment register override prefix bytes for these functions, or may use the value stored in the selected segment register to specify these functions. If the value stored in the selected segment register is used, then the value is conveyed to cache control unit 404 along with the segment identification value.

In still another embodiment, cache control unit 404 implements a speculative miss line fill function based on the use of the FS segment register override prefix byte. In this embodiment, if the FS segment override prefix byte is specified for a particular instruction and the address associated with that instruction misses internal cache unit io8, then the cache line containing the address is fetched from main memory even if the instruction was executed by execution unit 112 speculatively. Sometimes, a particular instruction may appear to be speculative to microprocessor 101 even though the address is correct and will be needed by the program in the near future. If a programmer or compiler is aware of this situation, it could specify that a cache miss for the instruction be speculatively fetched into internal cache 108. When used in the context of instruction execution, the term "speculative" means that an instruction is executed before that instruction is know to be required by the sequential execution of instructions in a program.

Another embodiment of cache controller 404 is configured to allocate a cache line for a store instruction which misses internal cache 108 if the ES segment register override prefix byte is included in the store instruction. If enabling bit 400 is not set, then store instructions which miss internal cache 108 are written to main memory without fetching the associated cache line into internal cache 108. If enabling bit 400 is set, then store instructions that miss internal cache 108 will cause a cache line fill of the associated data bytes to occur if the store instruction includes the ES segment register override prefix byte. If the ES segment register override prefix byte is not included, then the cache line fill will not occur and the store data will be written to main memory. In still a further embodiment, a store instruction which misses the cache will cause a cache line to be allocated but the associated data bytes will not be fetched from memory. The data bytes provided by the store instruction will be stored into the cache line. However, the other data bytes of the cache line are marked invalid in internal cache 108 until additional store instructions cause the other data bytes to become valid. In an alternative embodiment, the other data bytes are set to zero. An additional embodiment of cache control unit 404 is configured to used the value stored in the selected segment register to specify the above mentioned speculative miss line fill functions.

In one embodiment, control register 402 is control register 0 present in 80386 and later microprocessors. The enabling bit 400 is bit 31 of control register 0, the paging bit. When bit 31 is set, paging is enabled.

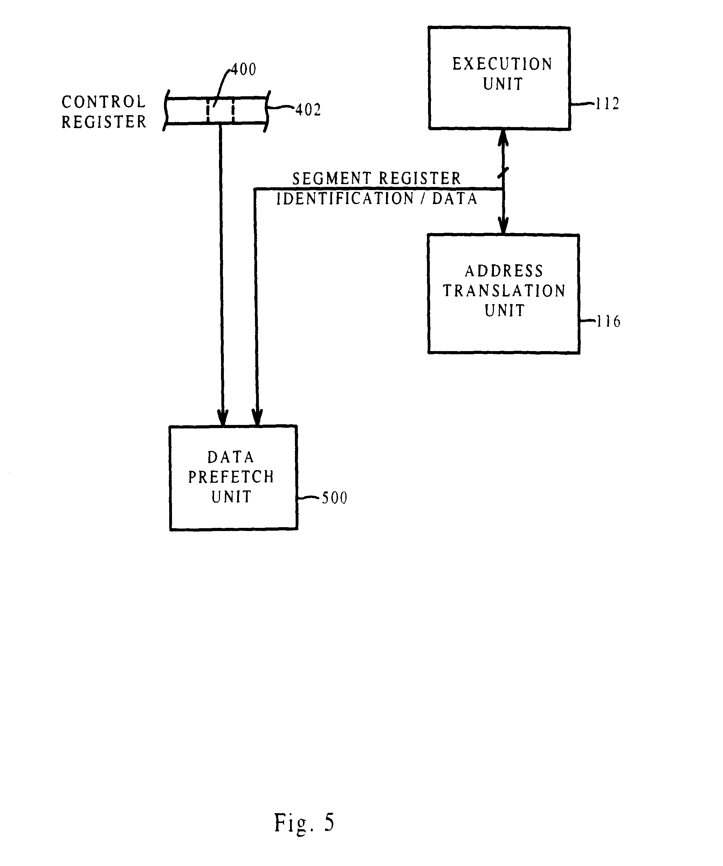

Figure 5 is a block diagram of a portion of microprocessor 101 including a data prefetch unit 500. Data prefetch unit 500 is coupled to execution unit 112 and to control register 402. Data prefetch unit 500 is selectively enabled using segment register identification information, provided by the execution unit 112, and using the contents of enabling bit 400 in control register 402. When enabling bit 400 is set, data prefetch unit 500 prefetches data associated with cache lines stored in consecutive groups of bytes of main memory 104 (shown in Figure 1) starting at the address indicated by the instruction. The cache lines are stored by internal cache unit 108. If enabling bit 400 is not set, then the data prefetch unit remains idle. In one embodiment, data prefetch unit 500 begins prefetching if the FS segment register override is used for an instruction. The number of consecutive cache lines fetched by data prefetch unit 500 may vary from embodiment to embodiment. In another embodiment, data prefetching begins under the control of the value stored in the selected segment register. Additionally, the number of consecutive cache lines to fetch may be specified by the value stored in the selected segment register.

In yet another embodiment, data prefetch unit 500 implements other prefetching schemes. It is noted that many prefetching schemes are suitable for data prefetch unit 500, including a stride based prefetching scheme and other "smart" prefetching schemes. Various "smart" prefetching schemes are well-known.

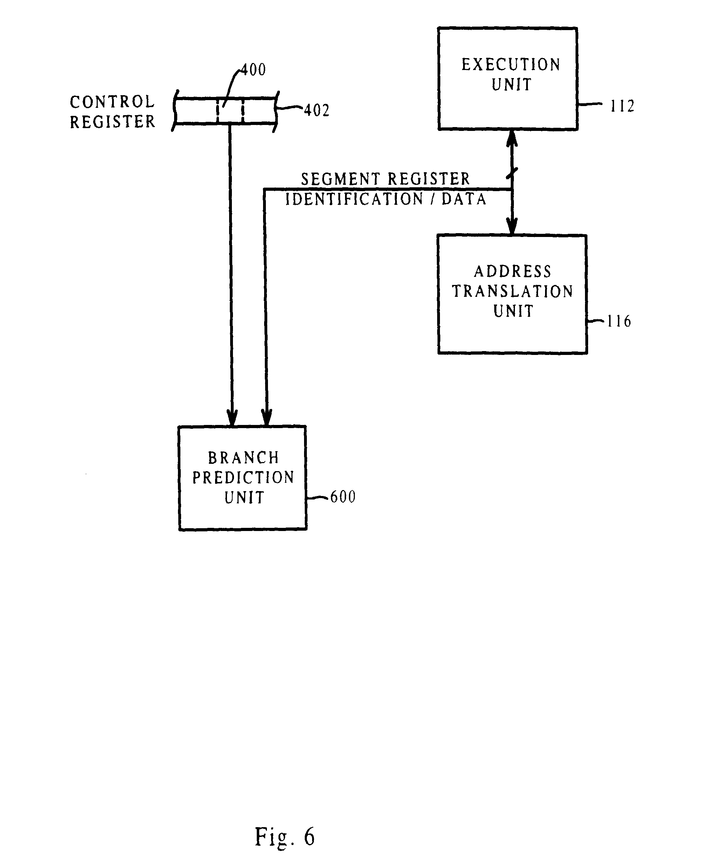

Figure 6 is a block diagram of a portion of microprocessor 101 including a branch prediction unit 600 which is including in fetch unit 110. Branch prediction unit 600 is coupled to execution unit 112 and to a control register 402. Branch prediction unit 600 implements the branch prediction scheme embodied within fetch unit 110, as well as an alternative scheme. The alternative scheme is enabled through segment register identification information, provided by execution unit 112, and the contents of enabling bit 400 in control register 402. If enabling bit 400 is not set, then the branch prediction scheme of branch prediction unit 600 is used. If enabling bit 400 is set, then the branch prediction scheme of branch prediction unit 600 is used except in the case that a noop instruction immediately prior to the branch instruction includes the FS or GS segment register override prefix bytes. In this case, the alternative branch prediction scheme is used.

In one embodiment, the alternative branch prediction scheme is to predict the branch taken if a prior noop includes the FS segment register override prefix byte, or to predict the branch not taken if the GS segment register override prefix byte is included. In the context of this application, the term "noop" does not refer to the NOP instruction of the x86 architecture. Instead, a "noop" is an instruction which does not change a register or memory, but does reference a memory location so that a segment register override prefix byte may be included with the instruction. An exemplary noop instruction would be an instruction which adds zero to the contents of a memory location. Additionally, the value stored in the selected segment register may be used to enable or disable the alternative branch prediction scheme.

The above-mentioned uses for the segment register identification information are transparent uses, except for the embodiments which use the value stored in the selected segment register (instead of the existence of a particular segment override prefix byte) to control a feature. Non-transparent uses are also contemplated, as described below.

Two exemplary non-transparent uses may be implemented within execution unit 112. Flint a segment register override byte may be used to create instructions which do not modify the condition flags. For example, the ADD instruction modifies the condition flags. An ADD instruction which uses a memory operand could be modified to an ADD instruction which does not modify the condition flags by using the segment register override prefix byte. In one embodiment, the FS segment register override prefix byte indicates that the ADD instruction will not modify the condition flags. This functionality allows for the scheduling of branches which are dependent on a condition flag generated by a particular operation. Numerous instructions may be executed between the branch instruction and the instruction it depends upon if the instructions do not modify the condition flags.

Another embodiment which aids the scheduling of branch instructions is to implement multiple sets of condition flags. In this manner, multiple sets of conditions may be maintained simultaneously. Segment register override prefix bytes may be used with instructions which modify the condition flags to indicate which of multiple sets of condition flags to modify. Noop instructions immediately prior to a branch instruction then use segment register override prefix bytes to indicate which of multiple sets of condition flags the branch instruction should use to determine the branch direction. If no segment register override prefix bytes are included with respect to an instruction, then a default set of condition flags are associated with the instruction. Another embodiment uses the value stored within the selected segment register to select the set of condition flags to be used by a particular instruction.

Another non-transparent use of segment register override prefix bytes may be embodied within instruction decode unit 114. As mentioned above, instruction decode unit 114 reads the register(s) specified as operands of an instruction and passes the values to execution unit 112 along with the instruction. In this embodiment, segment register override prefix bytes are used to select one of multiple register banks which store data. Each register bank includes the full complement of x86 registers. In this manner, the register set of the architecture may be expanded without changing the instruction encodings. As will be appreciated by those skilled in the art, a larger register set allows more operand values to be held in registers (which may be accessed quickly) and so accesses to memory (which typically require a longer period of time) are lessened. In one embodiment, no segment register override prefix byte specifies the first bank of registers. a segment register override prefix byte indicating the FS segment register specifies a second bank of registers. a segment register override prefix byte indicating the GS segment register specifies a third bank of registers, and a segment register override prefix byte indicating the ES segment register specifies a fourth bank of registers. In another embodiment, the value stored within the selected segment register is used to select the appropriate register bank from numerous register banks.

It is noted that many other non-transparent uses may be created for segment register override prefix bytes. The present invention contemplates transparent and non-transparent functions implemented through the use of segment register override prefix bytes. It is additionally noted that while the above embodiments are 80x86 microprocessors, any microprocessor implemented in any microprocessor architecture may benefit from a similar expansion of the architecture.

Numerous variations and modifications will become apparent to those skilled in the art once the above disclosure is fully appreciated. It is intended that the following claims be interpreted to embrace all such variations and modifications.

## Claims

1. A microprocessor comprising:
an address translation unit (116) configured to generate a physical address from a logical address and a segment value;
a plurality of segment registers (202) coupled to said address translation unit wherein at least one of said plurality of segment registers stores said segment value:
a first control unit coupled to said address translation unit wherein said first control unit is configured to detect an instruction field indicative of one of said plurality of segment registers and to convey a signal to said address translation unit indicative of said one of said plurality of segment registers;
a configuration register for storing a value indicative of an address translation mode of said microprocessor;
a second control unit (404) coupled to said configuration register and to said first control unit wherein said second control unit is configured to perform a function dependent on said value stored in said configuration register and further dependent on said signal from said first control unit.

2. The microprocessor as recited in claim 1 wherein said second control unit is configured to perform the function dependent on said segment value.

3. The microprocessor as recited in claim wherein said second control unit is a cache control unit (404).

4. The microprocessor as recited in claim 3 wherein said cache control unit is configured to ignore data bytes associated with an instruction including said instruction field.

5. The microprocessor as recited in claim 3 wherein said cache control unit is configured to ignore data bytes associated with an instruction including said instruction field according to said segment value.

6. The microprocessor as recited in claim 4 or 5 further comprising a bus interface unit (106) coupled to said cache control unit.

7. The microprocessor as recited in claim 6 wherein said bus interface unit is configured to convey a signal to an external cache unit (102) indicative of said ignoring function.

8. The microprocessor as recited in claim 3 wherein said cache control unit is configured to execute a cache flush operation with respect to a cache line including an address associated with an instruction including said instruction field.

9. The microprocessor as recited in claim 3 wherein said cache control unit is configured to execute a cache clean operation with respect to a cache line including an address associated with an instruction including said instruction field.

10. The microprocessor as recited in claim 3 wherein said cache control unit is configured to execute a cache flush operation with respect to a cache line including an address associated with an instruction including said instruction field according to said segment value.

11. The microprocessor as recited in claim 3 wherein said cache control unit is configured to execute a cache clean operation with respect to a cache line including an address associated with an instruction including said instruction field according to said segment value.

12. The microprocessor as recited in claim 3 wherein said cache control unit is further configured to request data bytes associated with an address associated with an instruction including said instruction field even if said instruction is speculative.

13. The microprocessor as recited in claim 3 wherein said cache control unit is configured to store data bytes associated with an instruction including said instruction field in a write-through mode.

14. The microprocessor as recited in claim 3 wherein said cache control unit is configured to store data bytes associated with an instruction including said instruction field in a writeback mode.

15. The microprocessor as recited in claim 3 wherein said cache control unit is configured to transfer data bytes associated with a store instruction into an associated data cache from main memory if said store instruction misses in said associated data cache.

16. The microprocessor as recited in claim 3 wherein said cache control unit is configured to allocate a cache line within an associated data cache for data bytes associated with said store instruction.

17. The microprocessor as recited in claim 3 wherein said second control unit is a data prefetch unit (500).

18. The microprocessor as recited in claim 17 wherein said data prefetch unit is configured to prefetch consecutive cache lines beginning at an address associated with an instruction including said instruction field.

19. The microprocessor as recited in claim 17 wherein said data prefetch unit is configured to prefetch consecutive cache lines beginning at an address associated with an instruction including said instruction field according to said segment value.

20. The microprocessor as claimed in any of claims 1 to 19 in combination with a computer system comprising a main memory wherein said microprocessor is coupled to said main memory.

21. The combination of claim 20 further comprising an external cache memory unit coupled between said main memory and said microprocessor.

22. The microprocessor as recited in claim 1 further comprising an execution unit (112) for executing instructions wherein said execution unit is configured to receive a signal and to modify the execution of said instructions according to said signal.

23. The microprocessor as recited in claim 22 in which the signal which the execution unit is configured to receive is the signal indicative of said one of said plurality of segment registers.

24. The microprocessor as recited in claim 22 in which said execution unit is configured to receive said segment value and to modify the execution of said instructions according to said segment value.

25. The microprocessor as recited in claim 23 or 24 wherein said execution unit is configured to modify a set of condition flags according to the results of executing an instruction.

26. The microprocessor as recited in claim 23 and 24 wherein said execution unit is configured to leave said set of condition flags unchanged when executing an instruction including said instruction field.

27. The microprocessor as recited in claim 24 and 25 wherein said execution unit is configured to leave said set of condition flags unchanged when executing an instruction including said instruction field according to said segment value.

28. The microprocessor as recited in claim 25 wherein said execution unit includes multiple sets of condition flags indicative of the results of executing an instruction.

29. The microprocessor as recited in claim 23 and 25 and 28 wherein said execution unit is configured to select one of said multiple sets of condition flags to modify according to the results of executing an instruction including said instruction field, and wherein said execution unit is configured to select said one of said multiple sets of condition flags according to said instruction field.

30. The microprocessor as recited in claim 24 and 25 and 28 wherein said execution unit is configured to select one of said multiple sets of condition flags to modify according to the results of executing an instruction including said instruction field, and wherein said execution unit is configured to select said one of said multiple sets of condition flags according to said segment value.

31. The microprocessor as claimed in any of claims 22 to 30 in combination with a computer system comprising a main memory (104), said
a microprocessor being coupled to said main memory.

32. The combination as recited in claim 31 further comprising an external cache memory unit coupled between said main memory and said microprocessor.

33. The microprocessor as recited in claim 1 wherein said second control unit is configured to select a register value associated with an instruction from one of multiple banks of registers, and wherein said second control unit selects said one of said multiple banks of registers according to said instruction field.

34. The microprocessor as recited in claim 1 wherein said second control unit is configured to receive said segment value and to modify the decoding of an instruction according to said segment value.

35. The microprocessor as recited in claim 34 wherein said second control unit is configured to select a register value associated with an instruction from one of multiple banks of registers, and wherein said second control unit selects said one of said multiple banks of registers according to said segment value.

36. The microprocessor as recited in claim 32 or 34 in combination with a computer system comprising a main memory, said microprocessor being coupled to said main memory.

37. The combination as recited in claim 36 further comprising an external cache memory unit coupled between said main memory and said microprocessor.

38. A method of operating a control unit according to an instruction field indicative of one of a plurality of segment registers comprising:
detecting the presence of said instruction field associated with a particular instruction;
communicating a value relating to said one of said plurality of segment registers to said control unit;
operating said control unit according to said value.

39. The method as recited in Claim 38 wherein said value is indicative of said one of said plurality of segment registers.

40. The method as recited in Claim 38, wherein said value is stored within said one of said plurality of segment registers.

41. The method as recited in Claim 35 or 36 further comprising operating said control unit in a default fashion if said instruction field is not detected.

42. The method as recited in claim 35 or 36 further comprising enabling said control unit via a value stored in a control register.

## Patentansprüche

1. Mikroprozessor mit:
- einer Adressenumsetzeinheit (116), die zum Erzeugen einer realen Adresse aus einer logischen Adresse und einem Segmentwert konfiguriert ist;
- mehreren mit der Adressenumsetzeinheit verbundenen Segmentregistern (202), wobei wenigstens eines der mehreren Segmentregister den Segmentwert speichert;
- einer mit der Adressenumsetzeinheit verbundenen ersten Steuereinheit, wobei die erste Steuereinheit zum Erkennen eines Befehlsfeldes, das eines der mehreren Segmentregister angibt, und zum Liefern eines das eine der mehreren Segmentregister angebenden Signals an die Adressenumsetzeinheit konfiguriert ist;
- einem Konfigurationsregister zum Speichern eines Werts, der einen Adressenumsetzmodus des Mikroprozessors angibt;
- einer zweiten mit dem Konfigurationsregister und der ersten Steuereinheit gekoppelten Steuereinheit (404), wobei die zweite Steuereinheit zum Durchführen einer Funktion in Abhängigkeit von dem im Konfigurationsregister gespeicherten Wert und ferner von dem Signal der ersten Steuereinheit konfiguriert ist.

2. Mikroprozessor nach Anspruch 1, bei dem die zweite Steuereinheit zum Durchführen der Funktion in Abhängigkeit vom Segmentwert konfiguriert ist.

3. Mikroprozessor nach Anspruch 2, bei dem die zweite Steuereinheit eine Cache-Steuereinheit (404) ist.

4. Mikroprozessor nach Anspruch 3, bei dem die Cache-Steuereinheit derart konfiguriert ist, daß sie Datenbytes ignoriert, die einem das Befehlsfeld enthaltenden Befehl zugeordnet sind.

5. Mikroprozessor nach Anspruch 3, bei dem die Cache-Steuereinheit derart konfiguriert ist, daß sie Datenbytes ignoriert, die einem Befehl zugeordnet sind, der ein dem Segmentwert entsprechendes Befehlsfeld enthält.

6. Mikroprozessor nach Anspruch 4 oder 5, ferner mit einer mit der Cache-Steuereinheit verbundenen Bus-Interfaceeinheit (106).

7. Mikroprozessor nach Anspruch 6, bei dem die Bus-Interfaceeinheit zum Liefern eines die Ignorierfinktion angebenden Signals an eine externe Cache-Einheit (102) konfiguriert ist.

8. Mikroprozessor nach Anspruch 3, bei dem die Cache-Steuereinheit konfiguriert ist, einen Cache-Flush-Vorgang in bezug auf eine Cache-Zeile durchzuführen, die eine einem das Befehlsfeld enthaltenden Befehl zugeordnete Adresse aufweist.

9. Mikroprozessor nach Anspruch 3, bei dem die Cache-Steuereinheit konfiguriert ist, einen Cache-Löschvorgang in bezug auf eine Cache-Zeile durchzuführen, die eine einem das Befehlsfeld enthaltenden Befehl zugeordnete Adresse aufweist.

10. , Mikroprozessor nach Anspruch 3, bei dem die Cache-Steuereinheit konfiguriert ist, einen Cache-Flush-Vorgang in bezug auf eine Cache-Zeile durchzuführen, die eine Adresse enthält, welch einem Befehl zugeordnet ist, der das dem Segmentwert entsprechende Befehlsfeld enthält.

11. Mikroprozessor nach Anspruch 3, bei dem die Cache-Steuereinheit konfiguriert ist, einen Cache-Löschvorgang in bezug auf eine Cache-Zeile durchzuführen, die eine Adresse enthält, welche einem Befehl zugeordnet ist, der das dem Segmentwert entsprechende Befehlsfeld enthält.

12. Mikroprozessor nach Anspruch 3, bei dem die Cache-Steuereinheit ferner konfiguriert ist, Datenbytes anzufordern, die einer Adresse zugeordnet sind, welche einem das Befehlsfeld enthaltenden Befehl zugeordnet sind, selbst wenn der Befehl ein potentieller Befehl ist.

13. Mikroprozessor nach Anspruch 3, bei dem die Cache-Steuereinheit konfiguriert ist, in einem Durchschreibmodus Datenbytes zu speichern, die einem das Befehlsfeld enthaltenden Befehl zugeordnet sind.

14. Mikroprozessor nach Anspruch 3, bei dem die Cache-Steuereinheit konfiguriert ist, in einem Rückschreibmodus Datenbytes zu speichern, die einem das Befehlsfeld enthaltenden Befehl zugeordnet sind.

15. Mikroprozessor nach Anspruch 3, bei dem die Cache-Steuereinheit konfiguriert ist, einem Speicherbefehl zugeordnete Datenbytes aus dem Hauptspeicher in ein zugeordnetes Daten-Cache zu übertragen, wenn der Speicherbefehl in dem zugeordneten Daten-Cache fehlt.

16. Mikroprozessor nach Anspruch 3, bei dem die Cache-Steuereinheit konfiguriert ist, eine Cache-Zeile in einem zugeordneten Daten-Cache für dem Speicherbefehl zugeordnete Datenbytes zuzuweisen.

17. Mikroprozessor nach Anspruch 3, bei dem die zweite Steuereinheit eine Daten-Vorabhol-Einheit (500) ist.

18. Mikroprozessor nach Anspruch 17, bei dem die Daten-Vorabhol-Einheit zum Vorabholen aufeinanderfolgender Cache-Zeilen, beginnend mit einer Adresse, die einem das Befehlsfeld enthaltenden Befehl zugeordnet ist, konfiguriert ist.

19. Mikroprozessor nach Anspruch 17, bei dem die Daten-Vorabhol-Einheit zum Vorabholen aufeinanderfolgender Cache-Zeilen, beginnend mit einer Adresse, die einem Befehl zugeordnet ist, der ein dem Segmentwert entsprechendes Befehlsfeld enthält. Konfiguriert ist.

20. Mikroprozessor nach einem der Ansprüche 1 bis 19 in Kombination mit einem Computersystem mit einem Hauptspeicher, wobei der Mikroprozessor mit dem Hauptspeicher verbunden ist.

21. Kombination nach Anspruch 20, ferner mit einer externen Cache-Speichereinheit, die zwischen den Hauptspeicher und den Mikroprozessor gekoppelt ist.

22. Mikroprozessor nach Anspruch 1, ferner mit einer Ausführeinheit (112) zum Ausführen von Befehlen, wobei die Befehlsausführungseinheit zum Empfangen eines Signals und zum Modifizieren der Ausführung der Befehle entsprechend dem Signal konfiguriert ist.

23. Mikroprozessor nach Anspruch 22, bei dem das Signal, für dessen Empfang die Befehlsausführungseinheit konfiguriert ist, das das eine der mehreren Segmentregister angebende Signal ist.

24. Mikroprozessor nach Anspruch 22, bei dem die Befehlsausführungseinheit zum Empfangen des Segmentwerts und zum Modifizieren der Ausführung der Befehle entsprechend dem Segmentwert konfiguriert ist.

25. Mikroprozessor nach Anspruch 23 oder 24, bei dem die Befehlsausführungseinheit zum Modifizieren einer Gruppe von Zustandsflaggen entsprechend den Ergebnissen der Ausführung eines Befehls konfiguriert ist.

26. Mikroprozessor nach den Ansprüchen 23 und 24, bei dem die Befehlsausführungseinheit konfiguriert ist, die Gruppe von Zustandsflaggen unverändert zu belassen, wenn sie einen das Befehlsfeld enthaltenden Befehl ausführt.

27. Mikroprozessor nach den Ansprüchen 24 und 25, bei dem die Befehlsausführungseinheit konfiguriert ist, die Gruppe von Zustandsflaggen unverändert zu belassen, wenn sie einen Befehl ausführt, der das dem Segmentwert entsprechende Befehlsfeld enthält.

28. Mikroprozessor nach Anspruch 25, bei dem die Befehlsausführungseinheit mehrere Gruppen von Zustandsflaggen aufweist, welche die Ergebnisse der Ausführung eines Befehls anzeigen.

29. Mikroprozessor nach Anspruch 23 und 25 und 28, bei dem die Befehlsausführungseinheit konfiguriert ist, eine der mehreren Gruppen von Zustandsflaggen zu wählen, um diese entsprechend den Ergebnissen der Ausführung eines das Befehlsfeld enthaltenden Befehls zu modifizieren, und bei dem die Befehlsausführungseinheit konfiguriert ist, die eine der mehreren Gruppen von Zustandsflaggen entsprechend dem Befehlsfeld zu wählen.

30. Mikroprozessor nach Anspruch 24 und 25 und 28, bei dem die Befehlsausführungseinheit konfiguriert ist, eine der mehreren Gruppen von Zustandsflaggen zu wählen, um diese entsprechend den Ergebnissen der Ausführung eines das Befehlsfeld enthaltenden Befehls zu modifizieren, und bei dem die Befehlsausführungseinheit konfiguriert ist, die eine der mehreren Gruppen von Zustandsflaggen entsprechend dem Segmentwert zu wählen.

31. Mikroprozessor nach einem der Ansprüche 22 bis 30 in Kombination mit einem einen Hauptspeicher (104) aufweisenden Computersystem, wobei ein Mikroprozessor mit dem Hauptspeicher verbunden ist.

32. Kombination nach Anspruch 31, ferner mit einer externen Cache-Einheit, die zwischen den Hauptspeicher und den Mikroprozessor gekoppelt ist.

33. Mikroprozessor nach Anspruch 1, bei dem die zweite Steuereinheit konfiguriert ist, einen Registerwert zu wählen, der einem Befehl von einer von mehreren Registerbänken zugeordnet ist, und bei dem die zweite Steuereinheit die eine der mehreren Registerbänke entsprechend dem Befehlsfeld wählt.

34. Mikroprozessor nach Anspruch 1, bei dem die zweite Steuereinheit konfiguriert ist, den Segmentwert zu empfangen und das Dekodieren eines Befehls entsprechend dem Segmentwert zu modifizieren.

35. Mikroprozessor nach Anspruch 34, bei dem die zweite Steuereinheit konfiguriert ist, einen Registerwert zu wählen, der einem Befehl von einer von mehreren Registerbänken zugeordnet ist, und bei dem die zweite Steuereinheit die eine der mehreren Registerbänke entsprechend dem Segmentwert wählt.

36. Mikroprozessor nach einem der Ansprüche 32 oder 34 in Kombination mit einem einen Hauptspeicher aufweisenden Computersystem, wobei ein Mikroprozessor mit dem Hauptspeicher verbunden ist.

37. Kombination nach Anspruch 36, ferner mit einer externen Cache-Einheit, die zwischen den Hauptspeicher und den Mikroprozessor gekoppelt ist.

38. Verfahren zum Betreiben einer Steuereinheit entsprechend einem Befehlsfeld, das eines von mehreren Segmentregistern angibt, mit den folgenden Schritten:
- Erkennen des Vorhandenseins des einem bestimmten Befehl zugeordneten Befehlsfeldes;
- Übertragen eines Wertes, der sich auf eines der mehreren Segmentregister bezieht, an die Steuereinheit;
- Betreiben der Steuereinheit entsprechend diesem Wert.

39. Verfahren nach Anspruch 38, bei dem der Wert eines der mehreren Segmentregister angibt.

40. Verfahren nach Anspruch 38, bei dem der Wert in einem der mehreren Segmentregister gespeichert wird.

41. Verfahren nach Anspruch 35 oder 36, ferner mit dem Schritt des Betreibens der Steuereinheit im Default-Modus, wenn das Befehlsfeld nicht erkannt wird.

42. Verfahren nach Anspruch 35 oder 36, ferner mit dem Schritt des Freigebens der Steuereinheit über einen in einem Steuerregister gespeicherten Wert.

## Revendications

1. Microprocesseur comprenant :
une unité de traduction d'adresse (116) configurée pour générer une adresse physique à partir d'une adresse logique et d'une valeur de segment ;
une pluralité de registres de segment (202) couplés à ladite unité de traduction d'adresse dans laquelle au moins l'un de ladite pluralité de registres de segment mémorise ladite valeur de segment ;
une première unité de commande couplée à ladite unité de traduction d'adresse dans laquelle ladite première unité de commande est configurée pour détecter une zone d'instruction indicatrice d'un registre de ladite pluralité de registres de segment et pour acheminer un signal vers ladite unité de traduction d'adresse indicateur dudit registre de ladite pluralité de registres de segment ;
un registre de configuration pour stocker une valeur indicatrice d'un mode de traduction d'adresse dudit microprocesseur ;
une seconde unité de commande (404) couplée audit registre de configuration et à ladite première unité de commande dans laquelle ladite seconde unité de commande est configurée pour exécuter une fonction dépendante de ladite valeur stockée dans ledit registre de configuration et dépendant, de plus, dudit signal venant de ladite première unité de commande.

2. Microprocesseur selon la revendication 1, dans lequel ladite seconde unité de commande est configurée pour exécuter la fonction dépendante de ladite valeur de segment.

3. Microprocesseur selon la revendication 2, dans lequel ladite seconde unité de commande est une unité de commande d'antémémoire (404).

4. Microprocesseur selon la revendication 3 dans lequel ladite unité de commande d'antémémoire est configurée en vue d'ignorer les octets de données associés à une instruction incluant ladite zone d'instruction.

5. Microprocesseur selon la revendication 3 dans lequel ladite unité de commande d'antémémoire est configurée pour ignorer des octets de données associés à une instruction incluant ladite zone d'instructions conforme à ladite valeur de segment.

6. Microprocesseur selon la revendication 4 ou 5 comprenant, de plus, une unité d'interface de bus (106) couplée à ladite unité de commande d'antémémoire.

7. Microprocesseur selon la revendication 6 dans lequel ladite unité d'interface de bus est configurée pour acheminer un signal vers une unité d'antémémoire externe (102) indicateur de ladite fonction d'ignorance.

8. Microprocesseur selon la revendication 3 dans lequel ladite unité de commande d'antémémoire est configurée pour exécuter une opération de flush d'antémémoire relative à une ligne d'antémémoire incluant une adresse associée à une instruction incluant ladite zone d'instruction.

9. Microprocesseur selon la revendication 3 dans lequel ladite unité de commande d'antémémoire est configurée pour exécuter une opération de nettoyage d'antémémoire relative à une ligne d'antémémoire incluant une adresse associée à une instruction incluant ladite zone d'instruction.

10. Microprocesseur selon la revendication 3 dans lequel ladite unité de commande d'antémémoire est configurée pour exécuter une opération de mise à niveau d'antémémoire relative à la ligne d'antémémoire incluant une adresse associée à une instruction incluant ladite zone d'instruction conforme à ladite valeur de segment.

11. Microprocesseur selon la revendication 3 dans lequel ladite unité de commande d'antémémoire est configurée pour exécuter une opération de nettoyage d'antémémoire relative à une ligne d'antémémoire incluant une adresse associée à une instruction incluant ladite zone d'instruction conforme à ladite valeur de segment.

12. Microprocesseur selon la revendication 3 dans lequel ladite unité de commande d'antémémoire est configurée, de plus, pour requérir des octets de données associés à une adresse associée à une instruction incluant ladite zone d'instruction même si ladite instruction est spéculative.

13. Microprocesseur selon la revendication 3 dans lequel ladite unité de commande d'antémémoire est configurée pour stocker les octets de données associés à une instruction incluant ladite zone d'instruction dans un mode d'écriture en requête.

14. Microprocesseur selon la revendication 3 dans lequel ladite unité de commande d'antémémoire est configurée pour stocker les octets de données associés à une instruction incluant ladite zone d'instruction dans un mode d'écriture en réponse.

15. Microprocesseur selon la revendication 3 dans lequel ladite unité de commande d'antémémoire est configurée pour tranférer les octets de données associés à une instruction de mémoire dans une antémémoire de données associée à partir de la mémoire principale si ladite instruction de mémoire manque dans ladite antémemoire de données associée.

16. Microprocesseur selon la revendication 3 dans lequel ladite unité de commande d'antémémoire est configurée pour allouer à une ligne d'antémémoire à l'intérieur d'une antémémoire de données associée des octets de données associés à ladite instruction de mémoire.

17. Microprocesseur selon la revendication 3 dans lequel ladite seconde unité de commande est une unité de pré-extraction de données (500).

18. Microprocesseur selon la revendication 17 dans lequel ladite unité de pré-extraction de données est configurée pour pré-extraire des lignes d'antémémoire consécutives commençant à une adresse associée à une instruction incluant ladite zone d'instruction.

19. Microprocesseur selon la revendication 17 dans lequel ladite unité de pré-extraction de données est configurée pour préextraire des lignes d'antémémoire consécutives commençant au niveau d'une adresse associée à une instruction incluant ladite zone d'instruction selon ladite valeur de segment.

20. Microprocesseur selon l'une quelconque des revendications 1 à 19 en combinaison avec un système d'ordinateur comprenant une mémoire principale dans lequel ledit microprocesseur est couplé à ladite mémoire principale.

21. Combinaison de la revendication 20 comprenant, de plus, une unité d'antémémoire externe couplée entre ladite mémoire principale et ledit microprocesseur.

22. Microprocesseur selon la revendication 1 comprenant, de plus, une unité d'exécution (112) pour exécuter des instructions dans lequel ladite unité d'exécution est configurée pour recevoir un signal et pour modifier l'exécution desdites instructions selon ledit signal.

23. Microprocesseur selon la revendication 22 dans lequel le signal pour la réception duquel l'unité d'exécution est configurée est le signal indicateur dudit registre de ladite pluralité de registres de segment.

24. Microprocesseur selon la revendication 22 dans lequel ladite unité d'exécution est configurée pour recevoir ladite valeur de segment et pour modifier l'exécution desdites instructions selon ladite valeur de segment.

25. Microprocesseur selon la revendication 23 ou 24 dans lequel ladite unité d'exécution est configurée pour modifier un ensemble de drapeaux de condition selon les résultats d'exécution d'une instruction.

26. Microprocesseur selon la revendication 23 et 24 dans lequel ladite unité d'exécution est configurée pour laisser ledit ensemble de drapeaux de condition inchangé lorsqu'on exécute une instruction incluant ladite zone d'instruction.

27. Microprocesseur selon la revendication 24 et 25 dans lequel ladite unité d'exécution est configurée pour laisser ledit ensemble de drapeaux de condition inchangé lorsqu'on exécute une instruction incluant ladite zone d'instruction selon ladite valeur de segment.

28. Microprocesseur selon la revendication 25 dans lequel ladite unité d'exécution comprend des ensembles multiples de drapeaux de condition indicateurs des résultats de l'exécution d'une instruction.

29. Microprocesseur selon la revendication 23 et 25 et 28 dans lequel ladite unité d'exécution est configurée pour sélectionner l'un desdits ensembles multiples de drapeaux de condition pour modifier selon les résultats de l'exécution une instruction incluant ladite zone d'instuction, et dans lequel ladite unité d'exécution est configurée pour sélectionner ledit ensemble desdits ensembles multiples de drapeaux de condition selon ladite zone d'instruction.

30. Microprocesseur selon la revendication 24 et 25 et 28 dans lequel ladite unité d'exécution est configurée pour sélectionner l'un desdits ensembles multiples de drapeaux de condition pour modifier selon les résultats de l'exécution d'une instruction incluant ladite zone d'instruction, et dans lequel ladite unité d'exécution est configurée pour sélectionner ledit ensemble desdits ensembles multiples de drapeaux de condition selon ladite valeur de segment.

31. Microprocesseur selon l'une quelconque des revendications 22 à 30 en combinaison avec un système d'ordinateur comprenant une mémoire principale (104), ledit microprocesseur étant couplé à ladite mémoire principale.

32. Combinaison selon la revendication 31 comprenant, de plus, une unité d'antémémoire externe couplée entre ladite mémoire principale et ledit microprocesseur.

33. Microprocesseur selon la revendication 1 dans lequel ladite seconde unité de commande est configurée pour sélectionner une valeur de registre associée à une instruction provenant de l'un des multiples blocs de registres, et dans lequel ladite seconde unité de commande sélectionne ledit bloc desdits blocs multiples de registres selon ladite zone d'instruction.

34. Microprocesseur selon la revendication 1 dans lequel ladite seconde unité de commande est configurée pour recevoir ladite valeur de segment et pour modifier le décodage d'une instruction selon ladite valeur de segment.

35. Microprocesseur selon la revendication 34 dans lequel ladite seconde unité de commande est configurée pour sélectionner une valeur de registre associée à une instruction provenant de l'un des blocs multiples de registres, et dans lequel ladite seconde unité de commande sélectionne ledit bloc desdites banques multiples de registres selon ladite valeur de segment.

36. Microprocesseur selon la revendication 32 ou 34 en combinaison avec un système d'ordinateur comprenant une mémoire principale , ledit microprocesseur étant couplé à ladite mémoire principale.

37. Combinaison selon la revendication 36 comprenant, de plus, une unité d'antémémoire externe couplée entre ladite mémoire principale et ledit microprocesseur.

38. Procédé de fonctionnement d'une unité de commande selon une zone d' instruction indicatrice d'un registre d'une pluralité de registres de segment consistant à :
détecter la présence de ladite zone d'instruction associée à une instruction particulière ;
communiquer une valeur se rapportant audit registre de ladite pluralité de registres de segment à ladite unité de commande ;
faire fonctionner ladite unité de commande selon ladite valeur.

39. Procédé selon la revendication 38 dans lequel ladite valeur est indicatrice dudit registre de ladite pluralité de registres de segment.

40. Procédé selon la revendication 38 dans lequel ladite valeur est stockée dans l'un de ladite pluralité de registres de segment.

41. Procédé selon la revendication 35 ou 36 consistant, de plus, à faire fonctionner ladite unité de commande dans un mode par défaut si ladite zone d'instruction n'est pas détectée.

42. Procédé selon la revendication 35 ou 36 consistant, de plus, à valider ladite unité de commande par l'intermédiaire d'une valeur stockée dans un registre de commande.
